# EUROPEAN PATENT APPLICATION

(11) **EP 4 836 315 A1**
(43) Date of publication of application: **04.11.2026**
(21) Application number: 25754503.8
(22) Date of filing: 08.02.2025
(51) Int. Cl.: H04B 7/185

(54) **COMMUNICATION METHOD, APPARATUS AND SYSTEM**

(30) Priority: 16.02.2024 CN 202410179361
(71) Applicant: Huawei Technologies Co., Ltd., Shenzhen, Guangdong 518129 (CN)
(72) Inventor: ZHU, Zhenjie, Shenzhen, Guangdong 518129 (CN); DOU, Fenghui, Shenzhen, Guangdong 518129 (CN)
(74) Representative: MERH-IP Matias Erny Reichl Hoffmann Patentanwälte PartG mbB
(86) International application number: PCT/CN2025/076490
(87) International publication number: WO 2025/171779

(57) **Abstract**

Embodiments of this application relate to the field of communication technologies, and provide a communication method, apparatus, and system, so that a store and forward operation can be supported via a satellite when a service link and a feeder link are not available simultaneously, thereby enabling data transmission from a core network to a terminal device, and helping the terminal device save power in this scenario. The method includes: sending a first request via a first service link, where the first request includes first information used to determine monitoring information; receiving a first response via the first service link, where the first response includes a first identifier or first time information, the first identifier corresponds to a first satellite that needs to be monitored, and the first time information corresponds to a first monitoring period; and monitoring at least one satellite based on the first identifier or the first time information, where the at least one satellite supports a store and forward (store and forwarding, S&F) operation.

## Description

This application claims priority to Chinese Patent Application No. 202410179361.0, filed with the China National Intellectual Property Administration on February 16, 2024 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

In a non-terrestrial network (non-terrestrial network, NTN), a user (or a terminal device) on the ground communicates with a satellite via a service link (service link), and the satellite may be connected to a ground station on a network side via a feeder link (feeder link), so as to implement end-to-end connection among the user, the satellite, and the network. Since the satellite is in motion relative to the user on the ground, the satellite provides discontinuous coverage for the user on the ground. Such a case may also be referred to as discontinuous network coverage for satellite access (Discontinuous Network Coverage for Satellite Access). Similarly, since the satellite is also in continuous motion relative to the ground station on the network side, the feeder link between the satellite and the ground station is also discontinuous. This may cause a situation in the NTN where the feeder link and the service link may not be available simultaneously. For example, in some remote areas in which no ground stations are deployed nearby, when the satellite provides coverage for users in these areas (where the service link is available), the satellite may not be able to be connected to an available ground station simultaneously (where the feeder link is unavailable).

Because the feeder link and the service link are not available simultaneously, the user on the ground cannot continuously monitor the satellite to obtain data from the network side in time. Consequently, monitoring the satellite by the user on the ground may be unnecessary, which is disadvantageous to meeting power saving requirements of the user on the ground.

### SUMMARY

Embodiments of this application provide a communication method, apparatus, and system, to transmit data from a core network to a terminal device and reduce an energy saving requirement of the terminal in a scenario in which a feeder link and a service link are not available simultaneously.

The following technical solutions are used in embodiments of this application.

According to a first aspect, a communication method is provided. The method includes: sending a first request via a first service link, where the first request includes first information used to determine monitoring information; receiving a first response via the first service link, where the first response includes a first identifier or first time information, the first identifier corresponds to a first satellite that needs to be monitored, and the first time information corresponds to a first monitoring period; and monitoring at least one satellite based on the first identifier or the first time information, where the at least one satellite supports a store and forward (store and forwarding, S&F) operation.

Based on the communication method provided in embodiments of this application, a terminal device may negotiate with a core network to determine a satellite to be monitored or a monitoring period, so as to prevent the terminal device from monitoring all satellites or performing monitoring in all periods in which a service link is available, thereby saving power. When a feeder link and a service link are not available simultaneously, the terminal device may monitor only a satellite that supports the S&F operation, to communicate with the core network and save power. Because the terminal device does not necessarily have information about a satellite, the terminal device may negotiate with the core network to determine a satellite or a monitoring period, to monitor only the satellite that supports the S&F operation, and may further select fewer satellites to be monitored or a shorter monitoring period, thereby achieving a better power saving effect.

In a possible implementation, the first response includes the first identifier, and correspondingly, the first information is used to determine the at least one satellite that needs to be monitored. The monitoring the at least one satellite based on the first identifier or the first time information is specifically: monitoring, based on the first identifier and preset ephemeris information or preset satellite coverage information, the first satellite corresponding to the first identifier.

In this solution, when the terminal device performs monitoring is determined by negotiating a satellite that needs to be monitored. The response message received by the terminal device carries the first identifier, and the terminal device may determine the first satellite by using the first identifier and monitor the first satellite, so as to avoid monitoring all satellites, thereby saving energy.

In a possible implementation, the first information includes first auxiliary information, and the at least one satellite that needs to be monitored may be determined by using the first auxiliary information.

In this solution, the first information sent by the terminal device includes the first auxiliary information. For example, the first auxiliary information may be monitoring mode information, and the at least one satellite that needs to be monitored may be determined based on the first auxiliary information. The terminal device may express a preference for satellite selection by using the first auxiliary information. For example, the terminal device may determine the first auxiliary information based on a power saving requirement, so that a finally determined satellite to be monitored better meets a requirement of the terminal device.

In a possible implementation, the first information further includes at least one satellite identification information, and the at least one satellite identification information includes the first identifier. In this solution, in addition to the first auxiliary information, the first information sent by the terminal device further includes the at least one satellite identification information, and the identification information indicates a satellite that the terminal device expects to monitor or does not expect to monitor. A satellite that is expected to be monitored or a satellite that is not expected to be monitored is specifically indicated, so that the terminal device has a higher probability of monitoring the expected satellite or avoiding monitoring the unexpected satellite, thereby better meeting a requirement of the terminal device.

In a possible implementation, the first response includes the first time information, the first time information is determined based on second time information included in the first information, and the determining the second time information is: determining the second time information based on preset ephemeris information or satellite coverage information, where the second time information indicates that a service link to a satellite is unavailable; and the monitoring the at least one satellite based on the first identifier or the first time information is specifically: receiving a paging message from the at least one satellite based on the first time information.

In this solution, when the terminal device monitors a satellite is determined by negotiating a monitoring period. The terminal device reports the second time information, receives the first time information, and monitors paging based on the first time information, thereby saving power, and making logic simple.

In a possible implementation, the second time information further includes period information, and the period information corresponds to a period in which the service link to the satellite is unavailable. In this solution, more information about the period in which the service link is unavailable can be transmitted by using the period information, so as to determine more monitoring period information through negotiation, thereby avoiding subsequent signaling overheads.

In a possible implementation, the first information further includes third time information, indicating an expected monitoring period, and the first time information is determined based on the third time information and the second time information. In this solution, the monitoring period expected by the terminal device is sent, so that a monitoring period finally determined through negotiation better meets a requirement of the terminal device.

In a possible implementation, the method further includes: establishing a second service link to the first satellite; receiving first data from the first satellite; and upon completing reception of the first data, stopping monitoring the first satellite when the second service link is available.

In this solution, the terminal device stops monitoring after determining that receiving of downlink data is completed through early termination of monitoring under the coverage of the first satellite. The terminal device no longer continuously monitors the first satellite until the terminal device is no longer under the coverage of the first satellite, thereby saving power.

In a possible implementation, the method further includes: receiving, from the first satellite, information indicating to stop monitoring, and stopping monitoring the first satellite based on the indication information. In this solution, the terminal device receives the indication information from the first satellite, to more reliably determine that transmission of downlink data is completed and that the terminal device may stop monitoring, so as to stop monitoring the first satellite without compromising communication quality.

In a possible implementation, the first request is an attach request or tracking area update (Tracking Area Update, TAU) request message, and the first response is an attach accept or tracking area update accept message. In this solution, by using the existing attach request or tracking area update request and the existing attach accept or tracking area update accept, signaling of a current network is saved, and a current network architecture is better adapted.

According to a second aspect, a communication method is provided. The method includes: receiving a first request from a first terminal device via a feeder link, where the first request includes first information used to determine monitoring information; determining a first response based on the first information, where the first response includes a first identifier or first time information, the first identifier corresponds to a first satellite that needs to be monitored, the first time information corresponds to a first monitoring period, and a service link of the first terminal device is available in the first monitoring period; sending the first response; receiving first data of the first terminal device; and when a service link between the first terminal device and the first satellite is unavailable, determining to send the first data to the first satellite, where the first satellite supports a store and forward (store and forwarding, S&F) operation on the first data.

Based on the communication method provided in embodiments of this application, a mobility management network element negotiates with the terminal device to determine the monitoring information of the terminal device, for example, a satellite to be monitored or a monitoring period, so as to prevent the terminal device from monitoring all satellites or performing monitoring in all periods in which a service link is available, thereby saving power. When the feeder link is available, downlink data of the terminal device is sent to an S&F satellite for buffering, so that the S&F satellite can transmit the downlink data to the terminal device when the service link is available, thereby implementing data communication. In addition, through negotiation, when the feeder link and the service link are not available simultaneously, the terminal device can monitor only a satellite that supports the S&F operation, so as to save power, and further protect privacy information of the satellite or an access network device. In addition, the mobility management network element and the terminal device may further select fewer satellites to be monitored or a shorter monitoring period, to achieve a better power saving effect.

In a possible implementation, the first response includes the first identifier, and that the first information is used to determine the monitoring information includes: the first information is used to determine at least one satellite that needs to be monitored; and the first identifier is determined based on a location of the first terminal device, the preset ephemeris information or satellite coverage information, and the first indication information. In this solution, when the terminal device performs monitoring is determined by negotiating a satellite that needs to be monitored between the mobility management network element and the terminal device. The response message received by the terminal device carries the first identifier, and the terminal device may determine the first satellite by using the first identifier and monitor the first satellite, so as to avoid monitoring all satellites, thereby saving energy.

In a possible implementation, the first information includes first auxiliary information used to determine the at least one satellite that needs to be monitored. In this solution, the first information received by the mobility management network element includes the first auxiliary information. For example, the first auxiliary information may be monitoring mode information, and the mobility management network element may determine, based on the first auxiliary information, the at least one satellite that needs to be monitored. The mobility management network element may obtain a preference of the terminal device for satellite selection by using the first auxiliary information. For example, the first auxiliary information is related to a power saving requirement of the terminal device, so that a finally determined satellite to be monitored better meets a requirement of the terminal device.

In a possible implementation, the first information further includes at least one satellite identification information, and the at least one satellite identification information includes the first identifier. In this solution, in addition to the first auxiliary information, the first information received by the mobility management network element further includes the at least one satellite identification information, and the identification information indicates a satellite that the terminal device expects to monitor or does not expect to monitor. A satellite that is expected to be monitored or a satellite that is not expected to be monitored is specifically indicated, so that the mobility management network element negotiates with the terminal device to make the terminal device have a higher probability of monitoring the expected satellite or avoiding monitoring the unexpected satellite, thereby better meeting a requirement of the terminal device.

In a possible implementation, the first information includes second time information, and the first response includes the first time information; and the first time information is determined based on the second time information, a location of the first terminal device, and preset ephemeris information or satellite coverage information, where the second time information indicates that the service link of the first terminal device is unavailable. In this solution, when the terminal device monitors a satellite is determined by negotiating a monitoring period, thereby saving power, and making logic simple.

In a possible implementation, the mobility management network element determines the first satellite based on the second time information, and sends the first data to the first satellite.

In a possible implementation, the second time information further includes period information, and the period information corresponds to a period in which the service link to the satellite is unavailable. In this solution, more information about the period in which the service link is unavailable can be transmitted by using the period information, so as to determine more monitoring period information through negotiation, thereby avoiding subsequent signaling overheads.

In a possible implementation, the first information further includes third time information, indicating an expected monitoring period, and the first time information is determined based on the third time information and the second time information. In this solution, the monitoring period expected by the terminal device is carried, so that a monitoring period finally determined through negotiation better meets a requirement of the terminal device.

In a possible implementation, the mobility management network element periodically maintains the first time information and the second time information based on the first information, to avoid a waste of resources caused by a plurality of signaling interactions.

In a possible implementation, the mobility management network element sends the paging request to the first satellite, where the paging request includes the first data, the paging request further includes paging time information, the paging time information is used to page the first terminal device, and the paging time information is determined based on the first identifier or the first time information. The paging request carries the first data and the information indicating the paging time, so that signaling overheads can be reduced, a time for paging the terminal device via the satellite can be reduced, and system power can be saved.

According to a third aspect, a communication method is provided. The method includes: receiving first data from a core network element via a feeder link, where the first data corresponds to a first terminal device; and when the feeder link is unavailable and a service link to the first terminal device is available, sending the first data to the first terminal device. By supporting a store and forward operation, a satellite can transmit data to a core network or a terminal device when a feeder link and a service link are not available simultaneously.

In a possible implementation, the method includes: receiving a paging request from the core network element via the feeder link, where the paging request includes the first data, where the paging request further includes first paging time information, and the first paging time information indicates to page the first terminal device in a first paging period. In this solution, paging is performed based on the paging time information, so that the terminal device that is performing monitoring can be more accurately paged, thereby saving power.

In a possible implementation, the method further includes: the first paging time information includes a first start time indicating to start to page the first terminal device.

In a possible implementation, the method further includes: the first paging time information further includes first time information corresponding to that the service link to the first terminal device is unavailable.

In a possible implementation, the method further includes: when sending of the first data is completed, sending first indication information to the first terminal device, where the first indication information indicates to stop monitoring or indicates that data transmission is completed. The first indication information is sent, so that the terminal device can stop monitoring, thereby saving power.

In a possible implementation, the method further includes: sending broadcast information, where the broadcast information carries information indicating that a store and forward operation is supported.

According to a fourth aspect, a communication apparatus is provided, configured to implement the foregoing methods. The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

In some possible designs, the communication apparatus may include a transceiver module and a processing module. The transceiver module may also be referred to as a transceiver unit, and is configured to implement a sending and/or receiving function in the method in any one of the first aspect to the third aspect and any possible implementation thereof. The transceiver module may include a transceiver circuit, a transceiver machine, a transceiver, or a communication interface. The processing module may be configured to implement a processing function in the method in any one of the first aspect to the third aspect and any possible implementation thereof.

In some possible designs, the transceiver module includes a sending module and a receiving module, respectively configured to implement a sending function and a receiving function in the method in any one of the first aspect to the third aspect and any possible implementation thereof.

According to a fifth aspect, a communication apparatus is provided, including a processor and a communication interface. The communication interface is configured to communicate with a module outside the communication apparatus. The processor is configured to execute a computer program or instructions, so that the communication apparatus performs the method in any one of the foregoing aspects.

According to a sixth aspect, a communication apparatus is provided, including at least one processor. The processor is configured to execute a computer program or instructions stored in a memory, so that the communication apparatus performs the method in any one of the foregoing aspects. In a possible implementation, the memory may be coupled to the processor, or may be independent of the processor. In a possible implementation, the communication apparatus further includes the memory. Optionally, the memory is integrated with the processor.

In the fourth aspect to the sixth aspect, the communication apparatus may be the terminal device in any one of the first aspect or the implementations of the first aspect, or an apparatus including the terminal device, or an apparatus included in the terminal device, for example, a chip or a chip system. Alternatively, the communication apparatus may be the mobility management network element in any one of the second aspect or the implementations of the second aspect, or an apparatus including the mobility management network element, or an apparatus included in the mobility management network element, for example, a chip or a chip system. Alternatively, the communication apparatus may be the access network device in any one of the third aspect or the implementations of the third aspect, or an apparatus (for example, a satellite) including the access network device, or an apparatus included in the access network device, for example, a chip or a chip system.

According to a seventh aspect, a communication apparatus is provided (for example, the communication apparatus may be a chip or a chip system). The communication apparatus includes a processor, configured to implement the functions in any one of the foregoing aspects or any implementation thereof.

In some possible designs, the communication apparatus includes a memory, and the memory is configured to store necessary program instructions and data.

In some possible designs, when the apparatus is a chip system, the apparatus may include a chip, or may include a chip and another discrete device.

It may be understood that, when the communication apparatus provided in any one of the fourth aspect to the seventh aspect is a chip, the foregoing sending action/function may be understood as output, and the foregoing receiving action/function may be understood as input.

According to an eighth aspect, a computer-readable storage medium is provided. The computer-readable storage medium stores a computer program or instructions. When the computer program or the instructions are run on a communication apparatus, the communication apparatus is caused to perform the method in any one of the foregoing aspects or any implementation thereof.

According to a ninth aspect, a computer program product including instructions is provided. When the computer program product runs on a communication apparatus, the communication apparatus is caused to perform the method in any one of the foregoing aspects or any implementation thereof.

For technical effects achieved by any implementation of the fourth aspect to the ninth aspect, refer to the technical effects achieved by corresponding implementations of the first aspect to the seventh aspect. Details are not described herein again.

It should be noted that various possible implementations of any one of the foregoing aspects may be combined, provided that the solutions are not contradictory.

According to a tenth aspect, a communication system is provided. The communication system includes a mobility management network element and an access network device. The mobility management network element is configured to perform the method in any one of the second aspect or the implementations of the second aspect. The first access network device is configured to perform the method in any one of the third aspect or the implementations of the third aspect.

In some possible designs, the communication system further includes a first terminal device. The first terminal device is configured to perform the method in any one of the first aspect or the implementations of the first aspect.

### BRIEF DESCRIPTION OF DRAWINGS

FIG. 1 is a schematic flowchart of control plane-based data transmission;
FIG. 2 is a diagram of an architecture of a communication system according to an embodiment of this application;
FIG. 3a and FIG. 3b are diagrams of application scenarios according to an embodiment of this application;
FIG. 4 is a diagram of a communication method according to an embodiment of this application;
FIG. 5 is a possible schematic flowchart according to an embodiment of this application;
FIG. 6 is another possible schematic flowchart according to an embodiment of this application;
FIG. 7 is a diagram of composition of a communication apparatus according to an embodiment of this application; and
FIG. 8 is a diagram of a hardware structure of a communication apparatus according to an embodiment of this application.

### DESCRIPTION OF EMBODIMENTS

For ease of understanding of the technical solutions in embodiments of this application, the following first briefly describes technologies related to this application.

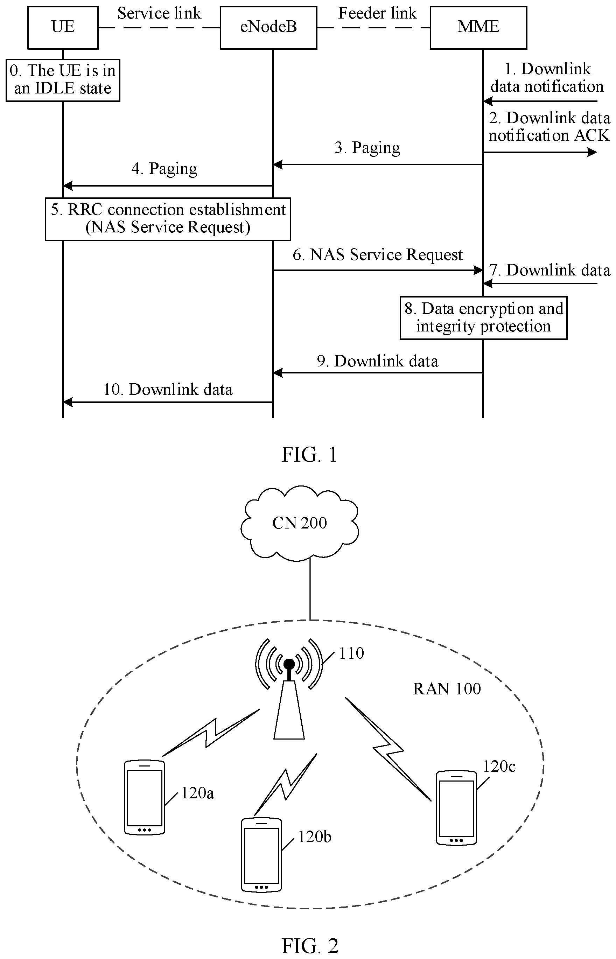

Control plane-based data transmission in CIoT on the ground:
The application to a 4th generation (4th generation, 4G) mobile communication system is used as an example. When both a feeder link and a service link in a non-terrestrial network NTN are available, a control plane-based downlink data transmission procedure is shown in FIG. 1, and includes the following steps.
0. A user equipment (User Equipment, UE) is attached to an evolved packet system (evolved packet system, EPS) and is in an idle (Idle) state.
1. After receiving a downlink data notification message from a network side, an MME sends a downlink data notification ack message (downlink data notification ack message), that is, an acknowledgment (acknowledgment, ACK) to the downlink data notification, to notify that the sent downlink data notification message has been received.
2. The MME sends, based on prestored ephemeris information, a paging message (paging message) to an evolved NodeB (evolved NodeB, eNodeB/eNB) on each satellite in a tracking area (tracking area, TA) with which the UE is registered, to request the eNode to page the UE over an air interface.
3. After receiving the paging message from the MME, the eNodeB pages the UE via a service link.
4. Because the UE is in the idle state, once the UE receives the paging message, the UE establishes an RRC connection to the eNodeB. Specifically, the UE sends an RRC connection request (RRC connection request) to the eNodeB. After receiving the RRC connection request, the eNodeB sends an RRC connection setup message to the UE. After receiving the RRC connection setup message, the UE sends an RRC connection setup complete message to the eNodeB. In this case, it may be considered that establishment of the RRC connection is completed. The RRC connection request message includes a non-access stratum (non-access stratum, NAS) control plane service request (control plane service request).
5. Because the UE is in the idle state, once the UE receives the paging message, the UE establishes an RRC connection to the eNode. Specifically, the UE sends an RRC connection request (RRC connection request) to the eNode. After receiving the RRC connection request, the eNode sends an RRC connection setup message to the UE. After receiving the RRC connection setup message, the UE sends an RRC connection setup complete message to the eNode. In this case, it may be considered that establishment of the RRC connection is completed. The RRC connection request message includes a non-access stratum (non-access stratum, NAS) control plane service request (control plane service request).
6. The eNodeB sends the NAS control plane service request of the UE to the MME. The MME may determine, based on the NAS control plane service request, that the UE is successfully paged, and may send downlink data to the UE.
7. The MME receives the downlink data of the UE from the network side.
8-9. The MME performs data encryption and integrity protection on the downlink data, and sends the downlink data to the eNodeB that successfully pages the UE.
10. The eNodeB sends the downlink data to the UE by using an RRC downlink message.

It may be understood that FIG. 1 is a diagram of the procedure applied to the 4G system. If the procedure shown in FIG. 1 is applied to a 5th generation (5th generation, 5G) mobile communication system or another communication system, names of the foregoing devices may be correspondingly replaced with names in the 5G system or the another communication system.

However, in an NTN scenario, there are cases with discontinuous satellite coverage and a discontinuous feeder link. A service link between a user equipment and a satellite is unavailable because the user equipment is not within satellite coverage or is within satellite coverage but blocked by objects. In this case, the user equipment cannot communicate with the satellite via the service link. The user equipment may determine an unavailability period (unavailability period) of the user equipment. For example, the user equipment may specifically calculate, by using preset ephemeris information or satellite coverage information, when the user equipment is within a coverage area of the satellite, to determine the unavailability period. For another example, the user equipment may alternatively determine an unavailability period by monitoring broadcast information of the satellite in a period of time. The unavailability period may correspond to different satellites, that is, the user equipment determines an unavailability period relative to a specific satellite. The unavailability period may also indicate that the user equipment cannot communicate with a satellite that the user equipment needs to monitor (or requests to monitor) in this period, that is, the user equipment is not under the coverage of the satellite that the user equipment needs to monitor (or requests to monitor). Further, the unavailability period may further indicate that the user equipment cannot communicate with any satellite in this period, that is, the user equipment is not under the coverage of any satellite. Similarly, the same problem also exists with a feeder link between a satellite and an MME. Therefore, applying the procedure shown in FIG. 1 in the NTN scenario is prone to the following disadvantages.

When a base station on a satellite needs to interact with a device on the ground via a feeder link/service link in a phase, if the required link is unavailable, the base station cannot complete the corresponding interaction. If the base station abandons the attempt to continue the interaction, the procedure cannot continue, and data cannot be sent from a core network to a terminal device. For example, if the base station determines to wait for the feeder link to recover to continue the procedure (for example, step 6), and the service link may be unavailable after the base station waits for the feeder link to recover to complete the procedure of the phase, the base station further needs to continue to wait for the service link to recover. In this case, communication between the UE and the network is almost impossible, and data transmission efficiency is extremely low.

To resolve this problem, the satellite may be configured to support a store and forward (Storing and Forwarding, S&F) operation, that is, an operation mode in which a current serving satellite of the UE may provide a communication service (store and forward information) for the UE without being connected to a terrestrial network (ground station) via the feeder link. In a case of an uplink, "store" refers to buffering uplink data from the UE when the service link is available, and "forward" refers to forwarding the stored uplink information to the terrestrial network when the feeder link is available. In a case of a downlink, "store" refers to buffering downlink data from the terrestrial network when the feeder link is available, and "forward" refers to forwarding the stored downlink data to the UE when the service link is available.

This enables communication with discontinuous satellite coverage and a discontinuous feeder link, and achieves higher efficiency in network switching. Furthermore, it facilitates communication for some communication applications, especially for the narrowband internet of things (narrowband internet of things, NB-IoT) in remote areas. With communication with the network ensured, the UE may also increase a power saving requirement.

Therefore, in scenarios with discontinuous satellite coverage and a discontinuous feeder link, how to ensure communication of the UE while meeting a low power saving requirement of the UE is a problem to be resolved. Based on this problem, this application provides a communication method, apparatus, and system, so that data can be sent from a core network to a terminal device in a scenario with a discontinuous feeder link. Compared with the procedure shown in FIG. 1, this application can save power of UE, and meet a power saving requirement of the UE.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Specifically, the words such as "example" or "for example" are used to present a related concept in a specific manner for ease of understanding.

In embodiments of this application, "indication" may include a direct indication and an indirect indication, or may include an explicit indication and an implicit indication. Information indicated by a piece of information (for example, the following first indication information or second indication information) is referred to as to-be-indicated information. In a specific implementation process, the to-be-indicated information is indicated in a plurality of manners, for example, but not limited to, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmit end device by sending configuration information to a receive end device.

In embodiments of this application, "predefined, "predefinition, "preconfigured", or "preconfiguration" may be implemented by prestoring corresponding code or a corresponding table in a device, or may be implemented in another manner for indicating related information, for example, may be burnt into the device before delivery of the device. A specific implementation is not limited in embodiments of this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments of this application.

The "protocol" in embodiments of this application may be a protocol family in the communication field, a standard protocol with a frame structure similar to the protocol family, or a related protocol applied to a future communication system. This is not specifically limited in embodiments of this application.

In embodiments of this application, descriptions such as "when ...", "in a case of ...", and "if" all mean that a device performs corresponding processing in an objective case, and are not intended to limit time. The descriptions do not mean that the device is required to have a determining action during implementation, and do not mean any other limitation.

In embodiments of this application, "sending information to ... (for example, to a terminal device) may be understood as that a destination of the information is the terminal device, and may include directly or indirectly sending the information to the anchor network element. "Receiving information from ... (for example, from a mobility management network element)" may be understood as that a source of the information is the mobility management network element, and may include directly or indirectly receiving the information from the mobility management network element. Information may undergo necessary processing, for example, a format change, between a source for sending the information and a destination. However, the destination may understand valid information from the source. Similar descriptions in this application may be construed in a similar manner, and details are not described herein again.

The technical solutions provided in this application may be applied to various communication systems. The communication system may be a 3rd generation partnership project (3rd generation partnership project, 3GPP) communication system, for example, a 4G mobile communication system, a long term evolution (long term evolution, LTE) system, a 5G mobile communication system and an evolved system thereof, an NTN system, a multiple-input multiple-output (multiple-input multiple-output, MIMO) system, a vehicle-to-everything (vehicle-to-everything, V2X) system, an LTE and new radio (new radio, NR) hybrid networking system, a device-to-device (device-to-device, D2D) system, a machine-to-machine (machine to machine, M2M) communication system, IoT (such as cellular internet of things (cellular internet of things, CIoT)), and another communication system. In addition, terms "system" and "network" may be replaced with each other.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

FIG. 2 is a diagram of a possible and non-limiting communication system to which an embodiment of this application is applicable. As shown in FIG. 2, the communication system 10 includes a radio access network (radio access network, RAN) 100. The RAN 100 includes at least one access network device 110 and at least one terminal device (for example, 70a to 70c in FIG. 2, which are collectively referred to as 70). The RAN 100 may further include another device, for example, a wireless relay device and/or a wireless backhaul device (not shown in FIG. 2). The terminal device 70 is connected to the access network device 110 in a wireless manner, for example, via a service link.

As shown in FIG. 2, the communication system 10 further includes a core network (a CN 200 in FIG. 2). The access network device 110 may be connected to the CN 200 in a wireless manner, for example, via a feeder link. A core network device in the CN 200 and the access network device 110 in the RAN 100 may be different physical devices, or may be a same physical device that integrates a logical function of the core network and a logical function of the radio access network.

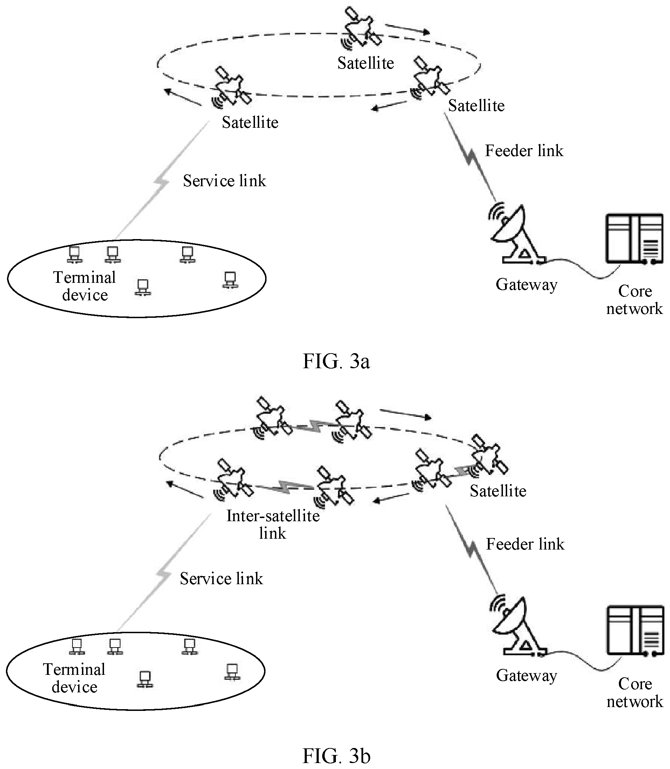

If the communication system 10 is applied to an NTN scenario, FIG. 3a and FIG. 3b are diagrams of possible and non-limiting application scenarios according to an embodiment of this application. In the application scenario shown in FIG. 3a, an access network device is deployed on a satellite, and there is no inter-satellite link (a communication link between satellites) between satellites. In the application scenario shown in FIG. 3b, an access network device is deployed on a satellite, and there is an inter-satellite link between satellites. In the application scenarios shown in FIG. 3a and FIG. 3b, the access network device on the satellite may communicate with a gateway on the ground via a feeder link, to further communicate with a core network on the ground. The access network device on the satellite may further communicate with a terminal device on the ground via a service link.

If embodiments of this application are applied to an IoT system, the terminal device in FIG. 3a and FIG. 3b may also be referred to as an IoT device.

Optionally, if the communication system 10 is applied to an NTN scenario, when an access network device is located on a satellite, some core network elements may also be disposed on the satellite, which may mean that some core network elements are disposed on the satellite, or some logical functions of some core network elements are disposed on the satellite. Some core network elements and the access network device may be located on a same satellite or different satellites. If some core network elements and the access network device are located on different satellites, some core network elements may communicate with the access network device via an inter-satellite link.

For example, if embodiments of this application are applied to a 4G mobile communication system, an MME may be located on a satellite. If embodiments of this application are applied to a 5G mobile communication system, an access and mobility management function (access and mobility management function, AMF) may be located on a satellite.

The access network device in embodiments of this application is a RAN node (or device) that connects a terminal device to a wireless network. In some network architectures, the access network device may be a base station (base station). Currently, some examples of the access network device are: a next generation NodeB (next generation NodeB, gNB), a transmission reception point (transmission reception point, TRP), an eNodeB, a radio network controller (radio network controller, RNC), a NodeB (NodeB, NB), a base station controller (base station controller, BSC), a base transceiver station (base transceiver station, BTS), a home base station (home evolved NodeB, or home NodeB, HNB), a baseband unit (baseband unit, BBU), a wireless fidelity (wireless fidelity, Wi-Fi) access point (access point, AP), or the like.

In addition, in a network structure, a plurality of access network devices cooperate to assist the terminal device in implementing radio access, and different access network devices separately implement some functions of the base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open radio access network (open RAN, O-RAN or ORAN), the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by a software module, a hardware module, or a combination of a software module and a hardware module.

All or some of functions of the access network device in this application may alternatively be implemented through a software function running on hardware, or may be implemented through a virtualization function instantiated on a platform (for example, a cloud platform). The access network device in this application may alternatively be a logical node, a logical module, or software that can implement all or some of the functions of the access network device.

The terminal device in embodiments of this application may also be referred to as a terminal (terminal), a UE, a mobile station (mobile station, MS), a mobile terminal, or the like, and is a device having a wireless transceiver function. The terminal device may be widely used in various scenarios, for example, vehicle-to-everything (vehicle-to-everything, V2X) communication, machine-type communication (machine-type communication, MTC), the internet of things (internet of things, IoT), virtual reality (virtual reality, VR), augmented reality (augmented reality, AR), industrial control (industrial control), self-driving (self-driving), telemedicine (telemedicine), smart grid (smart grid), smart home (smart home), smart office (Smart Office), smart bracelet (smart bracelet), and smart city (smart city). Currently, some examples of the terminal device are: a mobile phone, a tablet computer, a computer having a wireless transceiver function, a wearable device, a vehicle, an uncrewed aerial vehicle, a helicopter, an airplane, a ship, a robot, a robotic arm, a smart home device, and the like. A device form of the terminal device is not limited in embodiments of this application.

The core network element/core network device in embodiments of this application is a device that provides service support for the terminal device in the core network. Currently, some examples of the core network element are: an MME network element, an AMF network element, and the like, which are not listed one by one herein. The MME network element may be responsible for access and mobility management of the terminal device in the 4G system. The AMF network element may be responsible for access and mobility management of the terminal device in the 5G system.

In embodiments of this application, the network element may also be referred to as an entity or a functional entity. For example, the MME network element may also be referred to as an MME entity or an MME functional entity.

It should be noted that names of messages between network elements, names of parameters in the messages, or the like in the following embodiments of this application are merely examples, and may have other names during specific implementation. This is not specifically limited in embodiments of this application.

It should be noted that, in embodiments of this application, "buffer" and "store" (store) are a same concept, and may be replaced with each other.

It may be understood that, in embodiments of this application, each network element may perform some or all of the steps in embodiments of this application. These steps or operations are merely examples. In embodiments of this application, other operations or variations of various operations may be further performed. In addition, the steps may be performed in a sequence different from that presented in embodiments of this application, and not all the operations in embodiments of this application may be necessarily performed.

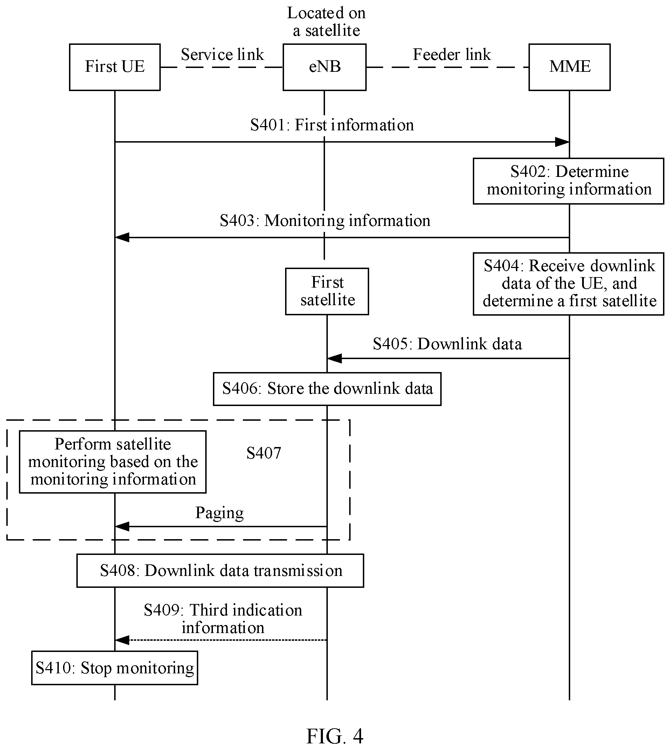

FIG. 4 shows a communication method according to an embodiment of this application. In FIG. 4, the method is described by using an example in which a mobility management network element and a first access network device are used as execution bodies of the interaction. However, the execution bodies of the interaction are not limited in this application. For example, the mobility management network element in FIG. 4 may be a module used in the mobility management network element, for example, a chip, a chip system, or a processor, or may be a logical node, a logical module, or software that can implement all or some functions of the mobility management network element. The first access network device in FIG. 4 may be a module used in the first access network device, for example, a chip, a chip system, or a processor, or may be a logical node, a logical module, or software that can implement all or some functions of the first access network device.

The mobility management network element in embodiments of this application may perform mobility management on a terminal device, and may have different names in different communication systems. This is not limited in embodiments of this application. For example, in a 4G communication system, the mobility management network element may be an MME network element. In a 5G communication system, the mobility management network element may be an AMF network element. In another communication system, the mobility management network element may have another name, which does not affect application of the communication method in embodiments of this application.

As shown in FIG. 4, the communication method includes steps S401 to S410.

S401: A first UE determines first information, and sends the first information to a mobility management network element, where the first information is used to determine monitoring information.

When a service link between the first UE and a satellite is available, the first UE sends a first request to an access network device on the satellite. When a feeder link between the satellite and the mobility management network element is available, the access network device on the satellite sends the first request to the mobility management network element. That a service link or a feeder link between devices is available may be understood as that a corresponding device (for example, the first UE or the mobility management network element) is under the coverage of the satellite on which the access network device is located. Correspondingly, when the corresponding device is not under the coverage of the satellite on which the access network device is located, the service link or the feeder link between the devices is unavailable.

The first information is used to determine the monitoring information. Specifically, the first information is determined by the first UE, and the first information corresponds to at least one S&F satellite that the first UE requests to monitor or at least one monitoring period of the first UE.

In one case, the first information is requested monitoring information, for example, may be specifically requested monitoring mode information, requested monitoring time information, or requested monitored satellite information. Using the requested monitoring mode information as an example, the requested monitoring mode information corresponds to at least one S&F satellite that supports S&F. The requested monitoring mode information may indicate a monitoring mode requested by the first UE. For example, the requested monitoring mode information includes monitoring a fixed single S&F satellite, monitoring at least one S&F satellite providing coverage, or monitoring all S&F satellites providing coverage. In this case, the first UE may not determine a specific satellite or preset ephemeris information or satellite coverage information, but sends the first information to the mobility management network element, and then the mobility management network element determines a specific satellite monitored by the first UE. The first UE may alternatively preset ephemeris information or satellite coverage information, and determine the first information based on the information. The first UE may determine the requested monitoring mode information based on a power saving requirement and/or a communication requirement (for example, a data transmission delay requirement).

Further, the first information determined by the first UE may further include at least one identifier, and each of the at least one identifier corresponds to one satellite. Through the identifier, the first UE may indicate a satellite requested to be activated or a satellite requested to be deactivated. The first UE determines the at least one identifier based on preset information, historical satellite monitoring information, and information from a core network. Specifically, the at least one identifier may be identification information (identifier, ID) of a satellite, or may be identification information of an access network device deployed on the satellite. Optionally, the first information includes both an identifier of a satellite requested by the first UE to be activated, and a satellite requested by the first UE to be deactivated.

In another case, the first information corresponds to a requested monitoring period, and the first information may be specifically an unavailability period of the first UE and/or a monitoring period of the first UE. For example, the first UE determines the first information based on preset ephemeris information or satellite coverage information; or the first UE may determine, based on broadcast information received from a satellite, a satellite that supports an S&F operation, and then determine the first information based on a message actually received from the satellite, a location of the first UE, or preset ephemeris information or satellite coverage information. Specifically, the first information may specifically include start time information, end time information, or duration information. Optionally, the first information may include a plurality of pieces of start time information, end time information, or duration information, and the first information corresponds to a plurality of requested monitoring periods. Preferably, the first information further includes period information, that is, the requested monitoring period is repeated based on the period information. The period information may be a determined value, or may be a series of values that are periodically traversed to correspond to different monitoring periods.

For example, the first information is the unavailability period of the first UE. The first UE may calculate a location of a corresponding satellite and a time at the location based on the preset ephemeris information, and determine when a service link to the satellite is available. The first UE may determine an unavailability period based on the location of the satellite, and in the unavailability period, the service link of the first UE is unavailable, where the unavailability period also indicates a time when the first UE performs monitoring. Alternatively, the first UE may determine an unavailability period based on monitoring the satellite or receiving broadcast information from the satellite; or the first UE determines, based on broadcast information of the satellite, whether the satellite is an S&F satellite, and determines that an unavailability period relative to the S&F satellite is the unavailability period of the first UE.

Possibly, the first UE may adjust the unavailability period based on a power saving requirement and/or a communication requirement (for example, a data transmission delay requirement), so that the unavailability period corresponding to the first information includes a partial satellite coverage period.

For example, the first information is the monitoring period of the first UE. In the monitoring period of the first UE, the first UE is under the coverage of at least one S&F satellite, and a service link between the first UE and the at least one S&F satellite is available. Further, the first UE may adjust the monitoring period of the first UE based on a power saving requirement and/or a communication requirement (for example, a data transmission delay requirement). To be specific, when the first UE has a high power saving requirement or a low communication requirement, the first UE shortens a monitoring period for the at least one S&F satellite. Specifically, the first UE stops monitoring when being under the coverage of the at least one S&F satellite.

In a possible implementation, the first information includes both an unavailability period of the first UE and a monitoring period of the first UE.

The first UE may add the first information to a first request, and send the first request to the mobility management network element. The first request may be an attach (Attach) request or tracking area update (Tracking Area Update, TAU) request message. For example, in 5G, the first request may be a registration (Registration) request message.

S402: The mobility management network element determines the monitoring information based on the first information.

The mobility management network element may obtain more information (for example, base station capability information, satellite capability information, and network load information). Therefore, in addition to the first information, the mobility management network element further determines the monitoring information based on obtained other information. For example, the other information may include one or more of a request of the first UE, subscription information of the first UE, a context of the first UE, a location of the first UE, ephemeris information, satellite coverage information, local configuration of the mobility management network element, a maximum quantity of paging times, and a base station capability.

The monitoring information indicates the first UE to perform monitoring, and may include an identifier of a monitored satellite, information about a monitoring period, and the like. For example, the first information is the foregoing requested monitoring mode information. The mobility management network element may determine at least one identification information based on the first information and the foregoing other information, where the at least one identification information corresponds to an S&F satellite monitored by the first UE. The mobility management network element stores the at least one identification information, for example, may store the at least one identification information in an S&F satellite monitoring list corresponding to the first UE. A satellite in the list is a satellite that the UE needs to monitor, or a satellite that may support an S&F operation. If the mobility management network element has stored an S&F satellite monitoring list corresponding to the first UE, the mobility management network element updates the list.

For example, the first information corresponds to the requested monitoring period. The mobility management network element may determine at least one monitoring period based on the first information and the foregoing other information. The mobility management network element may determine an unavailability period corresponding to the first UE. The unavailability period may indicate the at least one monitoring period, that is, a period for monitoring outside the unavailability period is the at least one monitoring period. The mobility management network element may alternatively determine a monitoring period corresponding to the first UE. The mobility management network element may alternatively determine an unavailability period and a monitoring period corresponding to the first UE. For specific included content, refer to the descriptions in S401. Details are not described herein again. Optionally, the mobility management network element may periodically maintain, based on the determined first information, the unavailability period corresponding to the first UE and/or the monitoring period corresponding to the first UE.

S403: The mobility management network element sends the determined monitoring information to the first UE.

The mobility management network element sends the monitoring information to an access network device via a feeder link. The access network device may be different from the access network device in step S401 (that is, the satellite on which the access network device in step S401 is located no longer provides coverage for the mobility management network element). The access network device sends the monitoring information to the first UE via a service link. The feeder link and the service link may not be available simultaneously.

For example, the mobility management network element updates the at least one identification information or the S&F satellite monitoring list corresponding to the first UE in the context of the UE, and sends updated at least one identification information or updated S&F satellite monitoring list to the first UE.

The mobility management network element may add the monitoring information to a first response, and send the first response to the first UE. The first response corresponds to the first request in S401, and the first response may be an attach accept message or a tracking area update (Tracking Area Update, TAU) accept message. For example, in the 5G system, the first response may be a registration accept message or a registration complete message.

S404: The mobility management network element receives, from the core network, downlink data corresponding to the first UE, and determines a first satellite.

The mobility management network element receives the downlink data of the first UE, and determines the first satellite required for communication. The downlink data may be mobile terminated data (Mobile Terminated Data, MT Data). For example, the mobility management network element determines, based on information (for example, identification or location information) about the first UE, that the downlink data needs to be sent via the S&F satellite; and the mobility management network element may determine the first satellite based on the determined monitoring information.

Optionally, when the monitoring information is the S&F satellite monitoring list of the first UE, the mobility management network element selects the first satellite in the list based on the list. The first satellite may be a satellite that provides coverage for the first UE earliest in the list, or the first satellite may be a satellite that provides coverage for the first UE for a longest time in the list. The mobility management network element may determine the first satellite based on a downlink data amount, a communication requirement, a power saving requirement of the first UE, satellite capability information, and the like.

Optionally, when the monitoring information is the unavailability period of the first UE or the monitoring period of the first UE, the mobility management network element determines the first satellite based on the monitoring information and at least one of ephemeris information, satellite coverage information, and location information of the first UE, where the first satellite supports the S&F operation.

S405: The mobility management network element sends the downlink data to the first satellite. It may also be understood that the mobility management network element sends the downlink data to an access network device on the first satellite.

Optionally, in addition to the downlink data, the mobility management network element further sends first indication information. The first indication information indicates the first satellite to use the S&F operation. Specifically, the first indication information may indicate the first satellite to store the downlink data.

Optionally, the mobility management network element may further send second indication information, where the second indication information corresponds to a paging period of the first satellite. The mobility management network element determines the paging period of the first satellite based on the first satellite, ephemeris information or satellite coverage information, and location information of the first UE. Optionally, the mobility management network element may further determine the paging period of the first satellite by considering an energy saving requirement of the first satellite, the received first information, and the like. For example, the second indication information may be paging period information, and specifically includes at least two of start time information, duration information, and end time information. Alternatively, the second indication information may be paging timing information, and the paging timing information indicates the first satellite to perform paging based on the paging timing information after the first satellite provides coverage for the first UE (that is, the first satellite reaches a tracking area (Tracking Area, TA) or tracking area identity (Tracking Area Identity, TAI) list in which the first UE is located). For example, the first satellite may start a timer, and page the first UE before the timer expires. Alternatively, the second indication information may be an unavailability period of the first UE stored in the mobility management network element, and the first satellite may perform paging based on the unavailability period. By determining the paging period of the first satellite, the mobility management network element can save energy of the first satellite, and avoid unnecessary paging and broadcasting.

For example, the mobility management network element sends a first paging request to the first satellite, where the first paging request carries at least one of the downlink data, the first indication information, and the second indication information.

S406: The first satellite stores the downlink data.

The first satellite supports the S&F operation. Because a service link between the first satellite and the first UE is currently unavailable, the first satellite stores the received downlink data. Alternatively, the first satellite stores the downlink data based on the first indication information.

S407: The first UE performs monitoring based on the received monitoring information, and receives paging from the first satellite.

The first UE receives the monitoring information from the mobility management network element, stores and maintains the corresponding information, and performs monitoring based on the monitoring information.

For example, when the monitoring information is the S&F satellite monitoring list of the first UE, the first UE starts to monitor paging only when the first satellite included in the list provides a service link. The first UE may determine, based on preset ephemeris information or satellite coverage information and the S&F satellite monitoring list, a time when the first UE enters a coverage area of the first satellite, and start monitoring. In an implementation, when the first UE determines that the first UE is under the coverage of the S&F satellite (for example, based on whether broadcast information of the satellite carries information indicating that the S&F operation is supported), the first UE may further determine whether the satellite is included in the S&F satellite monitoring list; and if yes, the first UE monitors paging; or otherwise, the first UE does not monitor paging.

For example, when the monitoring information is the unavailability period of the first UE or the monitoring period of the first UE, the first UE periodically maintains the unavailability period or the monitoring period, and determines a paging monitoring period.

The first satellite starts paging when covering the first UE, or may perform paging based on the received second indication information.

S408: The first UE performs downlink data transmission with the first satellite.

The first UE establishes a service link to the first satellite, and transmits downlink data via the service link. The first satellite sends the downlink data to the first UE when the service link is available. Optionally, the first UE sends uplink data via the service link.

S409: Optionally, the first satellite sends third indication information to the first UE, where the third indication information indicates to stop monitoring.

Because the first satellite stores the downlink data, and a feeder link between the first satellite and the mobility management network element is unavailable, the first satellite determines that transmission of the stored downlink data is completed, and the first satellite may send the third indication information to the first UE, to indicate the first UE to stop monitoring paging in a remaining coverage time of the first satellite. For example, the third indication information is a sleep indication or a stop indication. Alternatively, the third indication information indicates that the first satellite completes data transmission, for example, is a downlink data transmission complete indication. The first UE may determine, based on the third indication information, that data transmission is completed, and no longer receives new downlink data from the first satellite.

S410: The first UE stops monitoring.

The first UE determines, based on the ephemeris information or the satellite coverage information, to stop monitoring paging in the remaining coverage time of the first satellite. After establishing a connection to the first satellite once, the first UE completes receiving of the downlink data, and determines not to monitor paging in the remaining coverage time. For example, the first UE determines that the first satellite is an S&F satellite, that is, the first satellite stores limited downlink data. The first UE completes, through the current connection establishment, receiving of the downlink data stored in the first satellite, to determine not to monitor paging.

Alternatively, the first UE may stop monitoring based on the third indication information.

That the first UE stops monitoring may be that the first UE determines not to monitor paging in a discontinuous reception cycle, the first UE disables an access stratum function, or the like.

The first UE can save more power through early termination of monitoring.

According to the method in embodiments, the first UE negotiates with the mobility management network element about the monitoring information, and both the first UE and the mobility management network element store and/or periodically maintain the monitoring information, enabling the UE to complete reception of the downlink data when the service link and the feeder link are not available simultaneously, and saving more energy. Further, the mobility management network element may also indicate, based on the monitoring information, a base station on a satellite to reduce a paging time, thereby saving energy of the base station on the satellite.

A specific implementation in which the mobility management network element determines whether a connection between an access network device and a terminal device is available is not limited in embodiments of this application. The following describes a possible implementation provided in embodiments of this application by using an example in which whether a connection between a first access network device and a first terminal device is available is determined.

The mobility management network element determines, based on satellite coverage availability information corresponding to the first access network device and location information of the first terminal device, whether the first terminal device is within a coverage area corresponding to the first access network device (which may be a coverage area of a satellite in which the first access network device is located, or may be a coverage area of the first access network device, which is referred to as a coverage area for short below). When the first terminal device is within the coverage area, the mobility management network element determines that the communication connection between the first access network device and the first terminal device is available. When the first terminal device is not within the coverage area, the mobility management network element determines that the communication connection between the first access network device and the first terminal device is unavailable.

The location information of the first terminal device may include information indicating an area in which the first terminal device is located. For example, the location information of the first terminal device may include identification information of a tracking area (tracking area, TA) in which the first terminal device is located. For another example, the location information of the first terminal device may include a tracking area list (TA list) of a tracking area in which the first terminal device is located. Alternatively, the location information of the first terminal device may be information such as latitude and longitude information of the first terminal device.

A specific manner in which the mobility management network element obtains the location information of the first terminal device is not limited in embodiments of this application. For example, when the first terminal device enters an idle state, the mobility management network element may obtain information about a tracking area in which the first terminal device is located. For another example, the mobility management network element may obtain information about an updated tracking area according to a tracking area update (tracking area update, TAU) procedure of the first terminal device. The mobility management network element may use the obtained at least one information about the tracking area as the location information of the first terminal device.

The satellite coverage availability information corresponding to the first access network device may include a mapping relationship between a coverage area of a satellite in which the first access network device is located and a time. For example, the satellite coverage availability information corresponding to the first access network device may include the following mapping relationship: at 7:00, the coverage area of the satellite in which the first access network device is located is an area 1, at 8:00, the coverage area of the satellite in which the first access network device is located is an area 2, and the like.

Optionally, if the first access network device and one or more other access network devices are located on a same satellite, the satellite coverage availability information corresponding to the first access network device may include a mapping relationship between a coverage area of each access network device on the satellite and a time, or may include a mapping relationship between a coverage area of the first access network device and a time.

A specific manner in which the mobility management network element obtains the satellite coverage availability information corresponding to the first access network device is not limited in embodiments of this application. For example, the mobility management network element may preconfigure the satellite coverage availability information corresponding to the first access network device. For another example, the mobility management network element may obtain, through calculation based on ephemeris information of the first access network device, the satellite coverage availability information corresponding to the first access network device.

In a possible scenario, for determining the first access network device, if there are currently a plurality of access network devices whose communication connections to the mobility management network element are available and whose communication connections to the first terminal device are unavailable, the mobility management network element may select one access network device from the plurality of access network devices as the first access network device.

A specific implementation in which the first access network device determines whether the communication connection between the first access network device and the first terminal device is available is not limited in embodiments of this application. For example, a first paging message received by the first access network device may carry the location information of the first terminal device. The first access network device may determine, based on the location information of the first terminal device and the coverage area of the first access network device, whether the first access network device is within the coverage area of the first access network device; and if yes, may determine that the communication connection between the first access network device and the first terminal device is available; or if no, may determine that the communication connection between the first access network device and the first terminal device is unavailable.

How the mobility management network element determines whether downlink data of the first terminal device can be buffered in the mobility management network element is not limited in embodiments of this application. In a possible implementation, the mobility management network element may determine whether the downlink data of the first terminal device can be transmitted by using a store and forward operation; and if yes, the mobility management network element may determine that the downlink data of the first terminal device can be buffered in the mobility management network element.

The store and forward operation may be understood as follows: In a scenario with a discontinuous feeder link in an NTN network, data is first buffered in a mobility management network element located on a satellite, and then forwarded between a terminal device and a terrestrial core network through the mobility management network element.

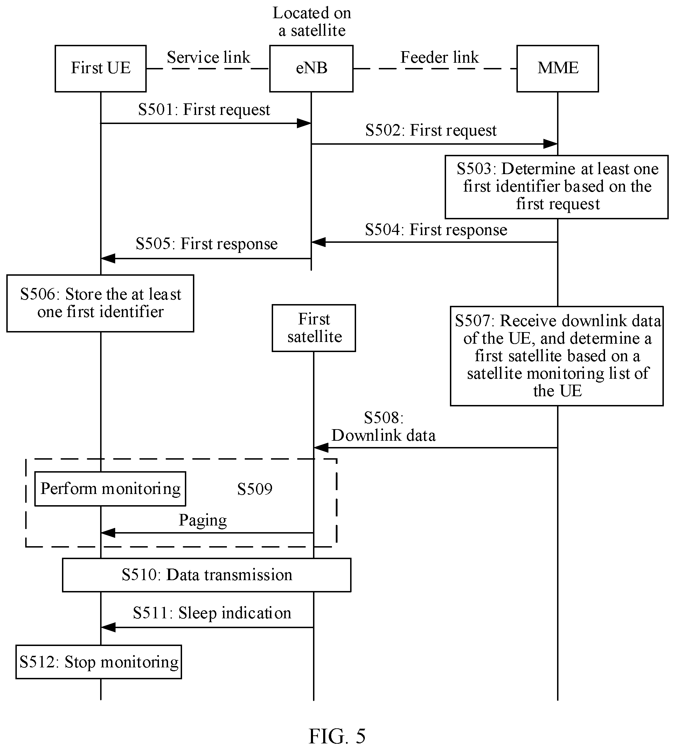

FIG. 5 shows a communication method according to an embodiment of this application. In FIG. 5, an example in which a first network is a 4G network is used, that is, an access network device of the first network is an evolved NodeB (evolved NodeB, eNB), and a first network element of the first network is a mobility management entity (mobility management entity, MME). However, execution bodies of the interaction are not limited in this application. For example, a mobility management network element in FIG. 5 may be a module used in the mobility management network element, for example, a chip, a chip system, or a processor, or may be a logical node, a logical module, or software that can implement all or some functions of the mobility management network element. A first access network device in FIG. 5 is an access network device disposed on a satellite, or may be a module used in the first access network device, for example, a chip, a chip system, or a processor, or may be a logical node, a logical module, or software that can implement all or some functions of the first access network device. The mobility management network element in embodiments of this application may perform mobility management on a terminal device, and may have different names in different communication systems. This is not limited in embodiments of this application. For example, in a 4G communication system, the mobility management network element may be an MME network element. In a 5G communication system, the mobility management network element may be an AMF network element. In another communication system, the mobility management network element may have another name, which does not affect application of the communication method in embodiments of this application.

As shown in FIG. 5, the communication method includes steps S501 to S512.

S501: An access network device receives a first request from a first UE, where the first request carries first indication information, and the first indication information is used to determine monitoring information.

Specifically, the first indication information indicates S&F monitoring information requested by the first UE. In an implementable method, the first indication information includes first mode information, and the first mode information indicates a satellite monitoring mode requested by the first UE, for example, monitoring only paging from a fixed single satellite, monitoring paging from some satellites providing coverage, or monitoring paging from all satellites providing coverage.

Optionally, the first indication information further includes at least one identification information, the at least one identification information corresponds to at least one satellite that provides coverage, and the first UE may request, by using the at least one identification information, to activate or deactivate the at least one corresponding satellite that provides coverage. A satellite that the first UE requests to activate and provides coverage is a satellite that the first UE requests to monitor. A satellite that the first UE requests to deactivate and provides coverage is a satellite that the first UE does not need to continue to monitor. The at least one identification information uniquely identifies the corresponding satellite. Specifically, the at least one identification information may be an identifier (ID) of the satellite, or may be identification information of an access network device disposed on the satellite.

In a possible implementation, the first request is an attach request or tracking area update (Tracking Area Update, TAU) request message.

S502: The access network device sends the first request to a mobility management network element.

Specifically, when a feeder link is available, the access network device sends the first request to the mobility management network element. In this case, a service link between the access network device and the first UE is disconnected.

S503: The mobility management network element determines at least one first identifier based on the first request, where the at least one first identifier corresponds to at least one first satellite, and the first satellite supports an S&F operation.

Specifically, the mobility management network element determines the at least one first identifier based on the received first indication information. Preferably, the mobility management network element determines, based on both the received first indication information and obtained second information, for example, subscription information of the first UE, local configuration of the mobility management network element, policy information (for example, a maximum quantity of paging times), and access network device capability information, at least one satellite that is monitored by the first UE and that corresponds to the at least one first identifier, where the satellite and an access network device disposed on the satellite support S&F.

After determining the at least one satellite that is monitored by the first UE and that corresponds to the at least one first identifier, the mobility management network element may store the at least one satellite as an updated S&F satellite monitoring list of the first UE. A satellite in the list is a satellite that the first UE needs to monitor, and the satellite (or an access network device disposed on the satellite) supports buffering and forwarding of downlink data of the first UE.

S504: The mobility management network element sends a first response to an access network device in response to the first request, where the first response message includes the at least one first identifier.

The access network device may be different from the access network device in step S502, that is, the satellite configured for the access network in step S502 no longer provides coverage for the mobility management network element.

For example, the first response is an attach accept or tracking area update (Tracking Area Update, TAU) accept message.

S505: The access network device sends the first response to the first UE.

The first response is sent when a service link between the access network device and the first UE is available. In this case, a feeder link between the access network device and the mobility management network element may have been disconnected.

S506: The first UE receives and stores the at least one first identifier.

For example, the first UE receives and stores the S&F satellite monitoring list.

S507: The mobility management network element receives, from a core network, downlink data corresponding to the first UE, and determines a first satellite.

Specifically, after receiving the downlink data corresponding to the first UE, the mobility management network element determines the first satellite based on the at least one first identifier, and sends the downlink data to the first satellite. The first satellite supports an S&F operation, and may buffer the downlink data. For example, the first satellite is a satellite that provides coverage for the first UE earliest in the satellites corresponding to the at least one first identifier.

S508: The mobility management network element sends the downlink data to the first satellite.

Optionally, the downlink data is carried in a paging request.

S509: The first UE performs monitoring based on the at least one first identifier carried in the first response message, and receives paging from the first satellite.

The first satellite pages the first UE based on the downlink data sent by the mobility management network element when the first satellite provides coverage for the first UE (or a service link is available).

The first UE monitors the first satellite based on the at least one first identifier when the first UE is under the coverage of the first satellite, where one of the at least one first identifier corresponds to the first satellite. For example, the first UE may determine, based on preset ephemeris information, whether the first UE is under the coverage of the first satellite. For example, the first UE may determine, based on a broadcast message of a satellite, that the satellite is one of the satellites corresponding to the at least one first identifier.

Optionally, the first UE determines, based on the received at least one first identifier and preconfigured ephemeris information, that the first UE is under the coverage of the first satellite, and monitors the first satellite when the first UE is under the coverage of the first satellite.

Optionally, the first UE determines, based on the broadcast message, whether the currently monitored satellite is the first satellite.

The first UE receives a paging message from an access network device disposed on the first satellite. Specifically, a feeder link between the first satellite and the mobility management network element is unavailable, and a service link between the first satellite and the first UE is available.

S510: The first UE receives the downlink data buffered in the first satellite.

S511: The first satellite sends a sleep indication to the first UE.

The first satellite determines that transmission of the buffered downlink data is completed, and sends indication information to the first UE. The indication information may be a sleep indication, and indicates that transmission of the downlink data of the first UE is completed or indicates the first UE to stop monitoring. Optionally, the indication information may be carried in a radio resource control (Radio Resource Control, RRC) connection release message.

S512: The first UE stops monitoring the first satellite.

After completing reception of the downlink data from the first satellite, the first UE stops monitoring the first satellite in a remaining coverage time of the first satellite. The first UE may stop monitoring the first satellite based on the received sleep indication.

In another possible implementation, the first UE determines that the first satellite completes transmission of the downlink data, and stops monitoring the first satellite. Specifically, if no new downlink data from the first satellite is received in a first time period since the downlink data from the first satellite is received, the first UE determines that the first satellite completes transmission of the downlink data, and stops monitoring the first satellite. Preferably, the first UE stops monitoring the first satellite after establishing a connection to the first satellite once.

According to the method in embodiments, the first UE may negotiate with the core network about an S&F satellite to be monitored, so as to reduce a quantity of monitored satellites, thereby achieving an energy saving effect. Further, after determining that the satellite completes sending of the downlink data, the first UE is allowed to no longer monitor paging in the remaining coverage time of the satellite, so that a time for the first UE to monitor paging when the service link is available can be further reduced, thereby improving an energy saving effect.

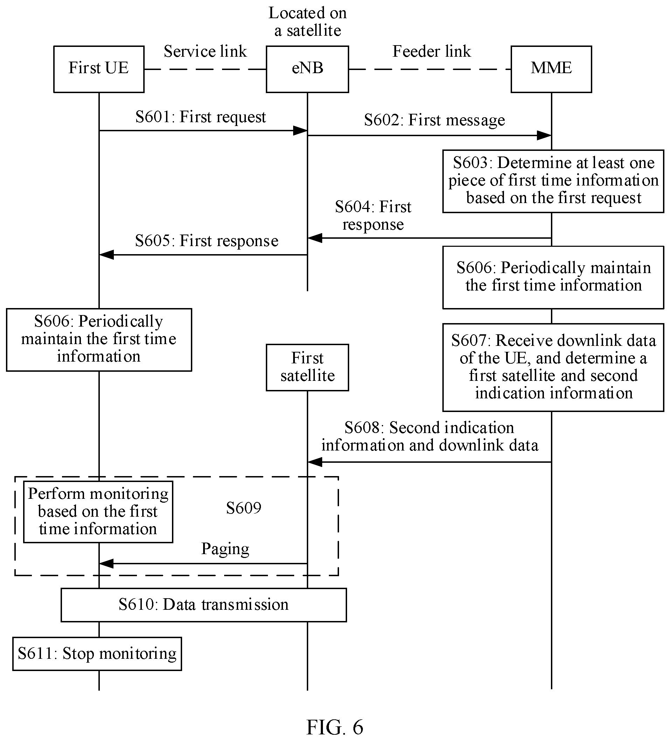

FIG. 6 shows another communication method according to an embodiment of this application. The communication method specifically includes steps S601 to S611.

S601: An access network device receives a first request from a first UE, where the first request carries first indication information, and the first indication information is used to determine monitoring period information.

Specifically, the first indication information includes an unavailability period of the first UE. Specifically, in the unavailability period of the first UE, a service link of the first UE is unavailable, that is, the first UE cannot connect to any satellite via the service link. It may also be understood that the first UE is not under the coverage of any satellite. The first UE may determine the unavailability period based on preset ephemeris information or satellite coverage information. The first UE may alternatively determine the unavailability period based on whether a broadcast message of a satellite is monitored. In an implementation, the unavailability period of the first UE may be determined by using start time information, end time information, or duration information. Optionally, the unavailability period of the first UE may be determined by using a plurality of pieces of information. Preferably, the unavailability period of the first UE further includes period information, that is, the first UE repeatedly experiences the unavailability period. The period information may be a determined value, or may be a series of values that are periodically traversed to represent different unavailability periods of the first UE.

Optionally, the first UE determines a first unavailability period of the first UE. In the first unavailability period, a service link of the first UE is unavailable, that is, the first UE cannot connect to any satellite via the service link. It may also be understood that the first UE is not under the coverage of any satellite. The first UE may determine the first unavailability period based on preset ephemeris information or satellite coverage information. The first UE may alternatively determine the unavailability period based on whether a broadcast message of a satellite is monitored. The first UE further determines a second unavailability period based on the first unavailability period and a power saving requirement. The second unavailability period includes the first unavailability period, and further includes a third period. In the third period, the first UE is under the coverage of a satellite. However, due to the power saving requirement, the first UE determines not to perform monitoring in the third period. Therefore, the determined second unavailability period includes both the first unavailability period and the third period. Optionally, the third period is variable. When the first UE has a high power saving requirement, the first UE determines that the third period is long. When the first UE has a low power saving requirement, the first UE determines that the third period is short. Therefore, the second unavailability period is also variable.

Further, in addition to the unavailability period of the first UE, the first indication information further includes a monitoring period expected by the first UE. The expected monitoring period may also be understood as a to-be-negotiated monitoring period. Specifically, the first UE may determine the expected monitoring period based on the power saving requirement. The expected monitoring period is included in a period other than the unavailability period of the first UE.

Specifically, the expected monitoring period may be determined by using start time information, end time information, or duration information. Optionally, the expected monitoring period of the first UE may alternatively be determined by using a plurality of pieces of information. Preferably, the expected monitoring period of the first UE further includes period information. The period information may be a determined value, or may be a series of values that are periodically traversed to represent different expected monitoring periods of the first UE.

In a possible implementation, the first request is an attach request or tracking area update (Tracking Area Update, TAU) request message.

S602: The access network device sends the first request to a mobility management network element.

Specifically, when a feeder link is available, the access network device sends the first request to the mobility management network element. In this case, a service link between the access network device and the first UE is disconnected.

S603: The mobility management network element determines at least one first time information based on the first request, where the first time information corresponds to a first monitoring period.

Specifically, the mobility management network element determines the at least one first monitoring period based on the received first indication information. In the first monitoring period, the first UE is within a coverage area of a satellite, and the satellite and an access network device disposed on the satellite support S&F. Preferably, the mobility management network element determines the at least one first monitoring period based on both the received first indication information and obtained second information, for example, subscription information of the first UE, local configuration of the mobility management network element, policy information (for example, a maximum quantity of paging times), and access network device capability information.

The first monitoring period may be represented as the unavailability period of the first UE and/or the monitoring period of the first UE. For a specific explanation, refer to S601. Details are not described herein again.

The mobility management network element may periodically update a next unavailability period and/or monitoring period of the first UE corresponding to the first monitoring period, and determine, by using an updated first monitoring period, an S&F satellite that has an available service link to the first UE after the unavailability period of the first UE, or determine an S&F satellite that has an available service link to the first UE in the monitoring period of the first UE.

S604: The mobility management network element sends a first response to the first UE to an access network device in response to the first request, where the first response includes at least one first time information, and the first time information corresponds to a first monitoring period.

In a possible implementation, the first response is an attach accept or tracking area update (Tracking Area Update, TAU) accept message.

S605: The access network device sends the first response to the first UE.

The first response is sent when a service link between the access network device and the first UE is available. In this case, a feeder link between the access network device and the mobility management network element may have been disconnected.

S606: The mobility management network element and the first UE periodically maintain the corresponding time information based on the at least one first time information.

The mobility management network element may periodically update a next unavailability period and/or monitoring period of the first UE corresponding to the first monitoring period, and determine, by using an updated first monitoring period, an S&F satellite that has an available service link to the first UE after the unavailability period of the first UE, or determine an S&F satellite that has an available service link to the first UE in the monitoring period of the first UE.

In addition, the first UE also periodically maintains a next unavailability period and/or monitoring period of the first UE based on the received first indication information, and determines, based on the unavailability period and/or the monitoring period, whether to monitor a satellite.

S607: The mobility management network element receives, from a core network, downlink data corresponding to the first UE, and determines a first satellite and second indication information.

Specifically, after receiving the downlink data corresponding to the first UE, the mobility management network element determines, based on the next unavailability period and/or monitoring period of the first UE and preset ephemeris information or satellite coverage information, the first satellite to be monitored by the first UE. The first satellite supports an S&F operation, and may buffer the downlink data. Optionally, the mobility management network element determines that an S&F satellite that provides coverage for the first UE earliest is the first satellite.

The mobility management network element further determines the second indication information based on the next unavailability period and/or monitoring period of the first UE, where the second indication information indicates time information for the first satellite to page the first UE.

In an implementation, the time information for paging the first UE may be determined by using start time information, end time information, or duration information. Optionally, the unavailability period of the first UE may be determined by using a plurality of pieces of information.

In another possible implementation, the time information for paging the first UE may be indicated by using timing information. The timing information indicates the first satellite to page the first UE in first duration since the first satellite reaches and covers a TA/TAI list in which the first UE is located. The timing information may correspond to start or setting of a timer.

In still another possible implementation, the time information indicating to page the first UE may be the unavailability period of the first UE. The unavailability period of the first UE is indicated to the first satellite, so that after covering the TA/TAI list in which the first UE is located, the first satellite performs paging in a period other than the unavailability period of the first UE.

S608: The mobility management network element sends the downlink data and the second indication information to the first satellite.

Optionally, the downlink data is carried in a paging request.

S609: The first UE performs monitoring based on the first time information, and receives paging from the first satellite.

The first satellite pages the first UE based on the second indication information.

The first UE may perform monitoring based on the first time information. In an implementation, the first UE may start a timer based on the first time information, or may determine, based on a broadcast message of a satellite, that the satellite is an S&F satellite, and monitor the satellite before the timer expires.

The first UE receives a paging message from an access network device disposed on the first satellite. Specifically, a feeder link between the first satellite and the mobility management network element is unavailable, and a service link between the first satellite and the first UE is available.

S610: The first UE receives the downlink data buffered in the first satellite.

S611: The first UE stops monitoring the first satellite.

Specifically, after completing reception of the downlink data from the first satellite, the first UE stops monitoring the first satellite in a remaining coverage time of the first satellite.

In a possible implementation, the first UE receives indication information from the first satellite, where the indication information indicates that transmission of the downlink data of the first UE is completed or indicates the first UE to stop monitoring; and the first UE stops monitoring the first satellite based on the indication information. Optionally, the indication information may be carried in a radio resource control (Radio Resource Control, RRC) connection release message. The first satellite determines, based on stored first data, that the downlink data sent to the first UE has been sent, and because a feeder link between the first satellite and the core network has been disconnected and new data of the first UE cannot be received from the core network, the first satellite determines that the first UE may stop monitoring, and sends the indication information.

In another possible implementation, the first UE determines that the first satellite completes transmission of the downlink data, and stops monitoring the first satellite. Specifically, if no new downlink data from the first satellite is received in a first time period since the downlink data from the first satellite is received, the first UE determines that the first satellite completes transmission of the downlink data, and stops monitoring the first satellite. Preferably, the first UE stops monitoring the first satellite after establishing a connection to the first satellite once.

According to the method in embodiments, the first UE may negotiate with the core network about the monitoring period (by using the unavailability period and/or the expected monitoring period of the first UE) for the S&F satellite, so as to reduce a quantity of monitored satellites, thereby achieving an energy saving effect. Further, after determining that the satellite completes sending of the downlink data, the first UE is allowed to no longer monitor paging in the remaining coverage time of the satellite, so that a time for the first UE to monitor paging when the service link is available can be further reduced, thereby improving an energy saving effect. In addition, because the MME also periodically updates the next unavailability period and/or monitoring period of the first UE, the MME may generate paging indication information and send the paging indication information to the satellite, so that the satellite can page the first UE in a more accurate time period. This also saves energy of the satellite, and brings higher energy efficiency to an entire paging system.

In addition, the first UE extends a reported unavailability period based on the power saving requirement of the first UE, so that a partial satellite coverage period is also classified into the reported unavailability period, thereby further reducing a quantity of monitored satellites and a time, especially reducing a paging monitoring time when a service link is available, and improving an energy saving effect.

The foregoing mainly describes the solutions provided in embodiments of this application from a perspective of interaction between the devices. Correspondingly, embodiments of this application further provide a communication apparatus, and the communication apparatus is configured to implement the foregoing methods. The communication apparatus may be the mobility management network element, the first access network device, or the first terminal device in the foregoing method embodiments, or an apparatus including the mobility management network element, the first access network device, or the first terminal device, or a component that may be used in the mobility management network element, the first access network device, or the first terminal device. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be understood that division into modules in embodiments of this application is an example, and is merely logical function division. In actual implementation, there may be another division manner.

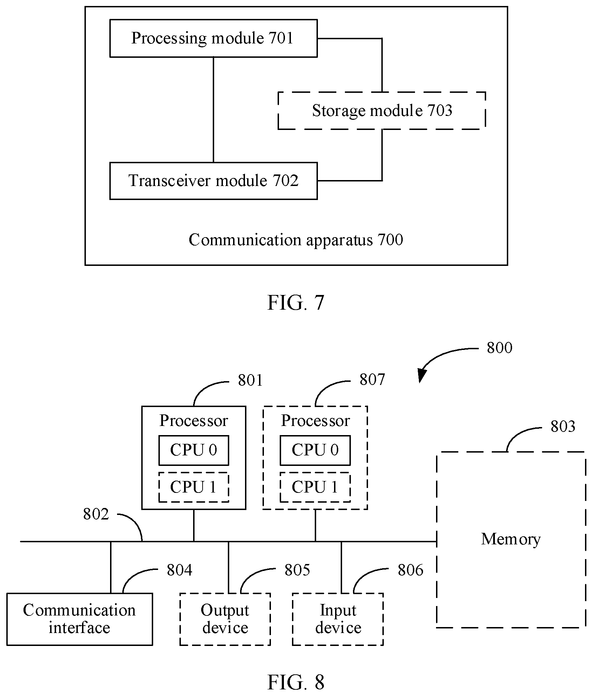

FIG. 7 is a diagram of a structure of a communication apparatus 700. The communication apparatus 700 includes a processing module 701 and a transceiver module 702. Optionally, the communication apparatus 700 may further include a storage module 703. The transceiver module 702 may also be referred to as a transceiver unit, and is configured to implement a transceiver function. For example, the transceiver module 702 may be a transceiver circuit, a transceiver machine, a transceiver, or a communication interface.

For example, the communication apparatus 700 is the first terminal device in the foregoing embodiments. A possible implementation is as follows:
The processing module 701 is configured to determine first information, where the first information is used to determine monitoring information. For example, the first information is requested monitoring information, for example, may be specifically requested monitoring mode information, requested monitoring time information, requested monitored satellite information, or the like; or the first information corresponds to a requested monitoring period, and the first information may be specifically an unavailability period of the first UE and/or a monitoring period of the first UE. The processing module 701 is configured to determine the first information based on at least one of a power saving requirement, a communication requirement, preset ephemeris information or satellite coverage information, and whether broadcast information is received.

The transceiver module 702 is configured to send the first information to a first access network device. Optionally, the transceiver module 702 is further configured to send a first request message, where the first request message includes the first information. The transceiver module 702 is configured to receive the monitoring information from the first access network device. Optionally, the transceiver module 702 is configured to receive a first response message, where the first response message includes the monitoring information.

In a possible implementation, the processing module 701 is configured to determine, based on the monitoring information, to monitor a satellite. For example, the processing module 701 further monitors the satellite based on the monitoring information and preset ephemeris information or satellite coverage information. Further, the processing module 701 is further configured to: determine, based on the broadcast information received by the transceiver module 702, that the first terminal device is under the coverage of an S&F satellite, and then determine, based on identification information of the satellite and the monitoring information, to monitor the satellite. The processing module 701 is further configured to determine, based on the monitoring information, not to monitor a satellite.

The transceiver module 702 is configured to receive broadcast information from a satellite, where the broadcast information includes identification information indicating the satellite or an access network device disposed on the satellite. Further, the broadcast information further includes information indicating whether the satellite supports an S&F operation.

In a possible implementation, the transceiver module 702 is further configured to receive a paging message from a first satellite, where the paging message is used to page the communication apparatus 700. Further, the paging message may include fifth indication information, and the fifth indication information indicates the communication apparatus 700 to receive downlink data buffered on the first satellite. The processing module 701 is configured to cause the communication apparatus 700 to establish an RRC connection to the first satellite. The transceiver module 702 is further configured to receive the downlink data from the first satellite.

In a possible implementation, the transceiver module 702 is further configured to send uplink data to the first satellite.

In a possible implementation, the transceiver module 702 is further configured to receive third indication information from the first satellite, where the third indication information indicates to stop monitoring or indicates that data transmission has been completed. Optionally, the transceiver module 702 is further configured to receive a connection release message, where the connection release message carries the third indication information. The processing module 701 is further configured to determine to stop monitoring based on the third indication information.

In a possible implementation, the processing module 701 is further configured to: determine that sending of the downlink data of the first satellite is completed, and determine to stop monitoring.

For example, the communication apparatus 700 is the mobility management network element in the foregoing embodiments. A possible implementation is as follows:
The transceiver module 702 is configured to receive first information, where the first information is used to determine monitoring information. Optionally, the transceiver module 702 is further configured to receive a first request message, where the first request message includes the first information. After the processing module 701 determines the monitoring information, the transceiver module 702 is further configured to send the monitoring information to a first access network device. Optionally, the transceiver module 702 is configured to send a first response message to the first access network device, where the first response message includes the monitoring information.

In a possible implementation, the transceiver module 702 is configured to receive a first notification message, where the first notification message indicates to receive downlink data of a first terminal device.

In a possible implementation, that the processing module 701 determines that the downlink data can be buffered on a first satellite includes at least one of the following: determining that the first satellite supports a first function, where the first function includes a store and forward function; or determining that the downlink data can be transmitted through a store and forward operation.

In a possible implementation, that the processing module 701 determines that the downlink data can be transmitted through the store and forward operation includes: determining, based on one or more of the following: subscription information of the first terminal device, a delay requirement of the downlink data, or a context of the first terminal device, that the downlink data can be transmitted through the store and forward operation.

In a possible implementation, the transceiver module 702 is further configured to receive a first request message from the first satellite, where the first request message is used to request to establish a data transmission channel between the communication apparatus 700 and the first satellite.

In a possible implementation, the processing module 701 is further configured to determine, based on satellite coverage availability information corresponding to the first satellite and location information of the first terminal device, whether the first terminal device is within a coverage area corresponding to the first satellite, where the satellite coverage information of the first satellite includes a mapping relationship between the coverage area corresponding to the first satellite and a time. When the first terminal device is within the coverage area, the processing module 701 determines that a communication connection between the first satellite and the first terminal device is available; or when the first terminal device is not within the coverage area, the processing module 701 determines that a communication connection between the first satellite and the first terminal device is unavailable.

In a possible implementation, the processing module 701 determines the first satellite (or the first access network device) required for communication. When the monitoring information is an S&F satellite monitoring list of the first terminal device, the processing module 701 is further configured to select the first satellite in the list based on the list. The first satellite may be a satellite that provides coverage for the first terminal device earliest in the list, or the first satellite may be a satellite that provides coverage for the first terminal device for a longest time in the list. The mobility management network element may determine the first satellite based on a downlink data amount, a communication requirement, a power saving requirement of the first terminal device, satellite capability information, and the like. When the monitoring information is an unavailability period of the first terminal device or a monitoring period of the first terminal device, the processing module 701 is further configured to determine the first satellite based on the monitoring information and at least one of ephemeris information, satellite coverage information, and location information of the first terminal device, where the first satellite supports the S&F operation.

In a possible implementation, the transceiver module 702 is further configured to: after obtaining the downlink data of the first terminal device, send the downlink data to the first satellite via an available feeder link.

In a possible implementation, when the processing module 701 determines that a service link between the first satellite located on the satellite and the first terminal device is unavailable, and the downlink data can be buffered on the first satellite, the transceiver module 702 is further configured to send the downlink data to the first satellite; optionally, is further configured to send first indication information, where the first indication information indicates to buffer the downlink data in the first satellite; and optionally, is further configured to send second indication information, where the second indication information indicates a paging period.

For example, the communication apparatus 700 is the first access network device in the foregoing embodiments. A possible implementation is as follows:
The transceiver module 702 is configured to receive first information from a first terminal device, where the first information is used to determine monitoring information. Optionally, the transceiver module 702 is further configured to receive a first request message, where the first request message includes the first information. The transceiver module 702 is further configured to send the first information to a mobility management network element. Optionally, the transceiver module 702 is further configured to send a first request message, where the first request message includes the first information. The transceiver module 702 is configured to receive the monitoring information from the mobility management network element. Optionally, the transceiver module 702 is configured to receive a first response message, where the first response message includes the monitoring information. The transceiver module 702 is further configured to send the monitoring information to the first terminal device. Optionally, the transceiver module 702 is configured to receive a first response message, where the first response message includes the monitoring information.

In a possible implementation, the transceiver module 702 is configured to receive a first paging message from the mobility management network element, where the first paging message is used to request to page the first terminal device. Before the communication apparatus 700 pages the first terminal device, the transceiver module 702 is further configured to send a first request message to the mobility management network element, where the first request message is used to request the mobility management network element to establish a data transmission channel with the communication apparatus 700, and a communication connection between a first access network device located on a satellite and the first terminal device is unavailable. The transceiver module 702 is further configured to receive and buffer downlink data from the mobility management network element. The transceiver module 702 is further configured to receive first indication information from the mobility management network element, where the first indication information indicates to buffer the downlink data in a first satellite. Further, the transceiver module 702 is further configured to receive second indication information from the mobility management network element, where the second indication information indicates a paging period.

In a possible implementation, when the transceiver module 702 receives and buffers the downlink data from the mobility management network element, the transceiver module 702 is further configured to send a second paging message to the first terminal device, where the second paging message is used to page the first terminal device. The transceiver module 702 is further configured to receive an RRC connection request message from the first terminal device. The transceiver module 702 is further configured to send an RRC connection setup message to the first terminal device. The transceiver module 702 is further configured to receive an RRC connection setup complete message from the first terminal device. The transceiver module 702 is further configured to send the downlink data to the first terminal device.

In a possible implementation, the transceiver module 702 is further configured to receive and buffer uplink data from the first terminal device.

In a possible implementation, the processing module 701 is further configured to determine that sending of the buffered downlink data has been completed. The transceiver module 702 is further configured to: when the processing module 701 determines that sending of the buffered downlink data has been completed, send third indication information to the first terminal device, where the third indication information indicates to stop monitoring or indicates that data transmission has been completed. Optionally, the transceiver module 702 is further configured to send a connection release message, where the connection release message carries the third indication information.

All related content of the steps in the foregoing method embodiments may be cited in function descriptions of the corresponding functional modules. Details are not described herein again.

Optionally, the module in FIG. 7 may also be referred to as a unit. For example, the processing module may be referred to as a processing unit, and the transceiver module may be referred to as a transceiver unit. In addition, in the communication apparatus shown in FIG. 7, names of the units may not be names shown in the figure. For example, the transceiver module may also be referred to as a communication module or a communication unit.

If each unit in FIG. 7 is implemented in a form of a software functional module and is sold or used as an independent product, the unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device (which may be a personal computer, a server, or a network device) or a processor to perform all or a part of the steps of the methods in embodiments of this application. A storage medium for storing the computer software product includes any medium that can store program code, such as a USB flash drive, a removable hard disk, a read-only memory (read-only memory, ROM), a random access memory (random access memory, RAM), a magnetic disk, or an optical disc.

In embodiments of this application, the communication apparatus 700 is presented in a form of functional modules obtained through division in an integrated manner. The "module" herein may be an application-specific integrated circuit (application-specific integrated circuit, ASIC), a circuit, a processor that executes one or more software programs or firmware programs, a memory, an integrated logic circuit, and/or another component that can provide the foregoing function.

In a simple embodiment, a person skilled in the art may figure out that the communication apparatus 700 may be in a form of a communication apparatus shown in FIG. 8.

As shown in FIG. 8, the communication apparatus 800 includes one or more processors 801, a communication line 802, and at least one communication interface (in FIG. 8, only an example in which the communication apparatus 800 includes a communication interface 804 and one processor 801 is used for description). Optionally, the communication apparatus 800 may further include a memory 803.

The processor 801 may be a general-purpose central processing unit (central processing unit, CPU), a microprocessor, an ASIC, or one or more integrated circuits for controlling program execution of the solutions of this application.

The communication line 802 may include a path for connecting different components.

The communication interface 804 may be a transceiver module, configured to communicate with another device or a communication network like the Ethernet, a RAN, a terminal, or a wireless local area network (wireless local area network, WLAN). For example, the transceiver module may be an apparatus such as a transceiver or a transceiver. Optionally, the communication interface 804 may alternatively be a transceiver circuit or an input/output interface located in the processor 801, and is configured to implement a signal input and a signal output of the processor.

The memory 803 may be an apparatus having a storage function. For example, the memory 803 may be a read-only memory (read-only memory, ROM), another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, optical disc storage (including compressed optical discs, laser discs, optical discs, digital versatile optical discs, and Blu-ray discs), magnetic disk storage media, or another magnetic storage device, or any another medium that can be used to carry or store desired program code in a form of an instruction or a data structure and that can be accessed by a computer, but not limited thereto. The memory may stand alone and is connected to the processor through the communication line 802. The memory may alternatively be integrated with the processor.

The memory 803 is configured to store computer executable instructions for executing the solutions of this application, and the processor 801 controls execution of the computer executable instructions. The processor 801 is configured to execute the computer executable instructions stored in the memory 803, to implement the communication method provided in embodiments of this application.

Alternatively, optionally, in embodiments of this application, the processor 801 may perform processing-related functions in the communication method provided in the following embodiments of this application, and the communication interface 804 is responsible for communication with another device or a communication network. This is not specifically limited in embodiments of this application.

Optionally, the computer executable instructions in this embodiment of this application may also be referred to as application program code. This is not specifically limited in this embodiment of this application.

In a specific implementation, in an embodiment, the processor 801 may include one or more CPUs, for example, a CPU 0 and a CPU 1 shown in FIG. 8.

During specific implementation, in an embodiment, the communication apparatus 800 may include a plurality of processors, for example, the processor 801 and a processor 807 in FIG. 8. Each of these processors may be a single-core (single-core) processor, or may be a multi-core (multi-core) processor. The processor herein may include but is not limited to at least one of the following various types of computing devices that run software: a CPU, a microprocessor, a digital signal processor (digital signal processor, DSP), a microcontroller unit (microcontroller unit, MCU), or an artificial intelligence processor, where each computing device may include one or more cores for executing software instructions to perform an operation or processing.

In specific implementation, in an embodiment, the communication apparatus 800 may further include an output device 805 and an input device 806. The output device 805 communicates with the processor 801, and may display information in a plurality of manners. For example, the output device 805 may be a liquid crystal display (liquid crystal display, LCD), a light-emitting diode (light-emitting diode, LED) display device, a cathode ray tube (cathode ray tube, CRT) display device, or a projector (projector). The input device 806 communicates with the processor 801, and may receive input of a user in a plurality of manners. For example, the input device 806 may be a mouse, a keyboard, a touchscreen device, or a sensor device.

The communication apparatus 800 may also be referred to as a communication device sometimes, and may be a general-purpose device or a dedicated device. For example, the communication apparatus 800 may be the foregoing mobility management network element, first access network device, first terminal device, or device having a structure similar to that in FIG. 8. A type of the communication apparatus 800 is not limited in embodiments of this application.

In addition, the composition structure shown in FIG. 8 does not constitute a limitation on the communication apparatus. In addition to the components shown in FIG. 8, the communication apparatus may include more or fewer components than those shown in the figure, or some components may be combined, or there may be a different component layout.

Optionally, the processor 801 in the communication apparatus 800 shown in FIG. 8 may invoke the computer executable instructions stored in the memory 803 to implement functions or implementation processes of the transceiver module 702 and the processing module 701 in FIG. 7. Alternatively, the processor 801 in the communication apparatus 800 shown in FIG. 8 may invoke the computer executable instructions stored in the memory 803 to implement a function or an implementation process of the processing module 701 in FIG. 7, and the communication interface 804 in the communication apparatus 800 shown in FIG. 8 may implement a function or an implementation process of the transceiver module 702 in FIG. 7.

It should be understood that one or more of the modules or units may be implemented by software, hardware, or a combination thereof. When any one of the modules or units is implemented by software, the software exists in a form of computer program instructions, and is stored in a memory, and a processor may be configured to execute the program instructions and implement the foregoing method procedures. The processor may be built in an SoC or ASIC, or may be an independent semiconductor chip. In addition to a core that is configured to execute software instructions to perform an operation or processing, the processor may further include a necessary hardware accelerator, for example, an FPGA, a programmable logic device (programmable logic device, PLD), or a logic circuit that implements a dedicated logic operation.

When the foregoing module or unit is implemented by hardware, the hardware may be any one or any combination of a CPU, a microprocessor, a DSP chip, an MCU, an artificial intelligence processor, an ASIC, an SoC, an FPGA, a PLD, a dedicated digital circuit, a hardware accelerator, or a non-integrated discrete device, which may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include a memory. When the communication apparatus is a chip system, the communication device may include a chip, or may include a chip and another discrete component. This is not specifically limited in this embodiment of this application.

Optionally, an embodiment of this application further provides a computer-readable storage medium. The computer-readable storage medium stores a computer program or instructions. When the computer program or the instructions are run on a communication apparatus, the communication apparatus is caused to perform the method according to any one of the foregoing method embodiments or any implementation thereof.

Optionally, an embodiment of this application further provides a communication system. The communication system includes the network device in the foregoing method embodiments and the terminal device in the foregoing method embodiments.

All or some of the foregoing embodiments may be implemented by using software, hardware, firmware, or any combination thereof. When a software program is used to implement the foregoing embodiments, the foregoing embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the scope of this application. In this way, if these modifications and variations of this application fall within the scope of the claims of this application and the equivalent technologies thereof, this application is also intended to include these modifications and variations.

## Claims

1. A communication method, wherein the method comprises:
sending a first request via a first service link, wherein the first request comprises first indication information, and the first indication information is used to determine monitoring information;
receiving a first response via the first service link, wherein the first response comprises a first identifier or first time information, the first identifier corresponds to a first satellite that needs to be monitored, and the first time information corresponds to a first monitoring period; and
monitoring at least one satellite based on the first identifier or the first time information, wherein the at least one satellite supports a store and forward (store and forwarding, S&F) operation.

2. The communication method according to claim 1, wherein the first response comprises the first identifier, and that the first indication information is used to determine the monitoring information comprises:
the first indication information is used to determine the at least one satellite that needs to be monitored; and
the monitoring the at least one satellite based on the first identifier or the first time information comprises:
monitoring the first satellite based on the first identifier and preset ephemeris information or satellite coverage information.

3. The communication method according to claim 2, wherein the first indication information comprises first auxiliary information, and the first indication information indicates to determine, based on the first auxiliary information, the at least one satellite that needs to be monitored.

4. The communication method according to claim 2, wherein the first indication information comprises at least one satellite identification information, and the at least one satellite identification information comprises the first identifier.

5. The communication method according to claim 1, wherein the first response comprises the first time information, and the method further comprises:
determining second time information based on preset ephemeris information or satellite coverage information, wherein the second time information indicates that a service link to a satellite is unavailable, wherein
the first indication information comprises the second time information, and the first time information is determined based on the second time information; and
the monitoring the at least one satellite based on the first identifier or the first time information comprises:
receiving a paging message from the at least one satellite based on the first time information.

6. The communication method according to claim 5, wherein the second time information further comprises period information, and the period information corresponds to a period in which the service link to the satellite is unavailable.

7. The communication method according to claim 5 or 6, wherein the first indication information further comprises third time information, the third time information indicates an expected monitoring period, and that the first time information is determined based on the second time information comprises: the first time information is determined based on the third time information and the second time information.

8. The communication method according to any one of claims 1 to 7, wherein the method further comprises:
establishing a second service link to the first satellite;
receiving first data from the first satellite; and
upon completing reception of the first data, stopping monitoring the first satellite when the second service link is available.

9. The communication method according to any one of claims 1 to 7, wherein the method further comprises:
receiving second indication information from the first satellite, wherein the second indication information indicates to stop monitoring; and
stopping monitoring the first satellite based on the second indication information.

10. The communication method according to any one of claims 1 to 9, wherein the method further comprises:
the first request is an attach request or tracking area update (Tracking Area Update, TAU) request message; and
the first response is an attach accept or tracking area update accept message.

11. A communication method, wherein the method comprises:
receiving a first request from a first terminal device, wherein the first request comprises first information, and the first indication information is used to determine monitoring information;
sending a first response based on the first information, wherein the first response comprises a first identifier or first time information, the first identifier corresponds to a first satellite that needs to be monitored, the first time information corresponds to a first monitoring period, and a service link of the first terminal device is available in the first monitoring period;
receiving first data of the first terminal device; and
when a service link between the first terminal device and the first satellite is unavailable, sending the first data to the first satellite, wherein the first satellite supports a store and forward (store and forwarding, S&F) operation on the first data, wherein
the first terminal accesses a network via a satellite.

12. The communication method according to claim 11, wherein the first response comprises the first identifier, and that the first indication information is used to determine the monitoring information comprises:
the first indication information is used to determine at least one satellite that needs to be monitored; and
the determining the first response based on the first information comprises:
determining the first identifier based on a location of the first terminal device, preset ephemeris information or satellite coverage information, and the first information.

13. The communication method according to claim 12, wherein the first indication information comprises first auxiliary information, and the first indication information indicates to determine, based on the first auxiliary information, the at least one satellite that needs to be monitored.

14. The communication method according to claim 12, wherein the first indication information comprises at least one satellite identification information, and the first identifier is further determined based on the at least one satellite identification information.

15. The communication method according to claim 11, wherein the first information comprises second time information, the second time information corresponds to that a service link between the first terminal device and a satellite is unavailable, and the determining the first response based on the first information comprises:
determining the first time information based on the second time information, a location of the first terminal device, and preset ephemeris information or satellite coverage information; and
the sending the first data to the first satellite comprises:
determining the first satellite based on the second time information; and
sending the first data to the first satellite.

16. The communication method according to claim 15, wherein the second time information further comprises period information, and the period information corresponds to a period in which the service link to the satellite is unavailable.

17. The communication method according to claim 15 or 16, wherein the first indication information further comprises third time information, the third time information indicates a monitoring period expected by the first terminal device, and that the first time information is determined based on the second time information comprises: the first time information is determined based on the third time information and the second time information.

18. The communication method according to any one of claims 15 to 17, wherein the first time information and the second time information are periodically maintained.

19. The communication method according to any one of claims 11 to 18, wherein the sending the first data to the first satellite comprises:
sending apaging request to the first satellite, wherein the paging request comprises the first data, the paging request further comprises paging time information, the paging time information is used to page the first terminal device, and the paging time information is determined based on the first identifier or the first time information.

20. A communication method, wherein the method comprises:
receiving first data from a core network element via a feeder link, wherein the first data corresponds to a first terminal device; and
when the feeder link is unavailable and a service link to the first terminal device is available, sending the first data to the first terminal device.

21. The method according to claim 20, wherein the receiving the first data from the core network element via the feeder link comprises:
receiving a paging request from the core network element via the feeder link, wherein the paging request comprises the first data, wherein
the paging request further comprises first paging time information, and the first paging time information indicates to page the first terminal device in a first paging period.

22. The method according to claim 21, wherein the first paging time information comprises a first start time, and the first start time indicates to start to page the first terminal device.

23. The method according to claim 22, wherein the first paging time information further comprises first time information, and the first time information corresponds to that the service link to the first terminal device is unavailable.

24. The method according to claim 20, wherein the method further comprises:
when sending of the first data is completed, sending first indication information to the first terminal device, wherein the first indication information indicates to stop monitoring.

25. The method according to any one of claims 20 to 24, wherein the method further comprises:
sending broadcast information, wherein the broadcast information carries information indicating that a store and forward operation is supported.

26. A communication apparatus, wherein the communication apparatus comprises a module or a unit configured to perform the method according to any one of claims 1 to 10, 11 to 19, or 20 to 25.

27. A communication apparatus, wherein the communication apparatus comprises a processor, and the processor is configured to execute a computer program or instructions stored in a memory, so that the communication apparatus performs the method according to any one of claims 1 to 10, 11 to 19, or 20 to 25.

28. A chip system, comprising a processor and an interface circuit, wherein
the interface circuit is configured to receive computer executable instructions and transmit the computer executable instructions to the processor; and
the processor is configured to execute the computer executable instructions, so that the communication apparatus performs the method according to any one of claims 1 to 10, 11 to 19, or 20 to 25.

29. A computer-readable storage medium, wherein the computer-readable storage medium stores a computer program or instructions, and when the computer program or the instructions are executed by a computer, the computer is caused to perform the method according to any one of claims 1 to 10, 11 to 19, or 20 to 25.

30. A communication system, wherein the communication system comprises a mobility management network element and a first access network device, the mobility management network element is configured to perform the method according to any one of claims 11 to 19, and the first access network device is configured to perform the method according to any one of claims 20 to 25.
